# EUROPEAN PATENT APPLICATION

(11) **EP 4 648 471 A2**
(43) Date of publication of application: **12.11.2025**
(21) Application number: 25203457.4
(22) Date of filing: 25.12.2018
(51) Int. Cl.: H04W 24/10, H04W 36/00, H04W 52/02

(54) **METHOD AND DEVICE FOR RRM MEASUREMENT**

(62) Divisional of application: 18944159.5
(71) Applicant: GUANGDONG OPPO MOBILE TELECOMMUNICATIONS CORP., LTD., Dongguan, Guangdong 523860 (CN)
(72) Inventor: XU, Weijie, Dongguan, 523860 (CN)
(74) Representative: Cork, Robert

(57) **Abstract**

Disclosed are a method and device for RRM measurement. The power consumption of a terminal device can be reduced. The method comprises: determining a measurement mode for the RRM measurement in the following multiple measurement modes: performing the RRM measurement only on a serving cell of the terminal device; not performing the RRM measurement; performing intra-frequency measurement on the basis of first information configured for measurement; performing inter-frequency measurement or different system measurement on the basis of the first information configured for measurement; performing the intra-frequency measurement on the basis of second information configured for measurement; and performing the inter-frequency measurement or the different system measurement on the basis of the second information configured for measurement.

## Description

### TECHNICAL FIELD

Embodiments of the application relate to the communication field, and more specifically, to a method and a device for radio resource management (RRM) measurement.

### BACKGROUND

The 5G system or new radio (NR) system has the characteristics of large bandwidth, high peak rate, and low delay, which bring many challenges to the terminal equipment. For example, large bandwidth causes sharp increase in power consumption of each radio frequency device on respective radio frequency path of the terminal equipment. The high peak rate requires the baseband processing device of the terminal equipment to operate at a high speed, which also causes a sharp increase in the power consumption of the terminal equipment. Therefore, how to reduce the power consumption of the terminal equipment has become an urgent problem to be solved.

### SUMMARY

Embodiments of the application provide a method and a device for RRM measurement, which can reduce power consumption of the terminal device.

According to a first aspect, there is provided a method for RRM measurement, including: determining, by a terminal device, a measurement mode of the RRM measurement in following multiple measurement modes: performing the RRM measurement only on a serving cell of the terminal device; not performing the RRM measurement; performing intra-frequency measurement based on first information configured for measurement; performing inter-frequency measurement or inter-RAT measurement based on the first information configured for measurement; performing intra-frequency measurement based on second information configured for measurement; and performing inter-frequency measurement or inter-RAT measurement based on the second information configured for measurement.

According to a second aspect, there is provided a method for RRM measurement, including: sending, by a network device, second indication information, wherein the second indication information is used for indicating a measurement mode of the RRM measurement in following multiple measurement modes: performing the RRM measurement only on a serving cell of a terminal device; not performing the RRM measurement; performing intra-frequency measurement based on first information configured for measurement; performing inter-frequency measurement or inter-RAT measurement based on the first information configured for measurement; performing intra-frequency measurement based on second information configured for measurement; and performing inter-frequency measurement or inter-RAT measurement based on the second information configured for measurement.

According to a third aspect, there is provided a method for RRM measurement, including: sending, by a network device, first indication information, wherein the first indication information is used for indicating a threshold corresponding to each of at least one measurement parameter used by the RRM measurement, and the threshold corresponding to each of the at least one measurement parameter is used by a terminal device for determining a measurement mode of the RRM measurement in following multiple measurement modes: performing the RRM measurement only on a serving cell of the terminal device; not performing the RRM measurement; performing intra-frequency measurement based on first information configured for measurement; performing inter-frequency measurement or inter-RAT measurement based on the first information configured for measurement; performing intra-frequency measurement based on second information configured for measurement; and performing inter-frequency measurement or inter-RAT measurement based on the second information configured for measurement.

According to a fourth aspect, there is provided a terminal device, configured to implement the method according to the forgoing first aspect or any embodiment thereof. Specifically, the terminal device includes a function module configured to implement the method according to the forgoing first aspect or any embodiment thereof.

According to a fifth aspect, there is provided a network device, configured to implement the method according to the forgoing second aspect or any embodiment thereof. Specifically, the network device includes a function module configured to implement the method according to the forgoing second aspect or any embodiment thereof.

According to a sixth aspect, there is provided a network device, configured to implement the method according to the forgoing third aspect or any embodiment thereof. Specifically, the network device includes a function module configured to implement the method according to the forgoing third aspect or any embodiment thereof.

According to a seventh aspect, there is provided a terminal device, including a processor and a memory, wherein the memory is configured to store a computer program, and the processor is configured to call and run the computer program stored in the memory, thereby implementing the method according to the forgoing first aspect or any embodiment thereof.

According to an eighth aspect, there is provided a network device, including a processor and a memory, wherein the memory is configured to store a computer program, and the processor is configured to call and run the computer program stored in the memory, thereby implementing the method according to the forgoing second aspect or any embodiment thereof.

According to a ninth aspect, there is provided a network device, including a processor and a memory, wherein the memory is configured to store a computer program, and the processor is configured to call and run the computer program stored in the memory, thereby implementing the method according to the forgoing third aspect or any embodiment thereof.

According to a tenth aspect, there is provided a chip configured to implement the method according to the forgoing first aspect or any embodiment thereof. Specifically, the chip includes: a processor, configured to call and run a computer program from a memory, thereby causing an apparatus installed with the chip to implement the method according to the forgoing first aspect or any embodiment thereof.

According to an eleventh aspect, there is provided a chip configured to implement the method according to the forgoing second aspect or any embodiment thereof. Specifically, the chip includes: a processor, configured to call and run a computer program from a memory, thereby causing an apparatus installed with the chip to implement the method according to the forgoing second aspect or any embodiment thereof.

According to a twelfth aspect, there is provided a chip configured to implement the method according to the forgoing third aspect or any embodiment thereof. Specifically, the chip includes: a processor, configured to call and run a computer program from a memory, thereby causing an apparatus installed with the chip to implement the method according to the forgoing third aspect or any embodiment thereof.

According to a thirteenth aspect, there is provided a computer readable storage medium, being used for storing a computer program, wherein the computer program is used for causing a computer to implement the method according to the forgoing first aspect or any embodiment thereof.

According to a fourteenth aspect, there is provided a computer readable storage medium, being used for storing a computer program, wherein the computer program is used for causing a computer to implement the method according to the forgoing second aspect or any embodiment thereof.

According to a fifteenth aspect, there is provided a computer readable storage medium, being used for storing a computer program, wherein the computer program is used for causing a computer to implement the method according to the forgoing third aspect or any embodiment thereof.

According to a sixteenth aspect, there is provided a computer program product including computer program instructions, wherein the computer program instructions are used for causing a computer to implement the method according to the forgoing first aspect or any embodiment thereof.

According to a seventeenth aspect, there is provided a computer program product including computer program instructions, wherein the computer program instructions are used for causing a computer to implement the method according to the forgoing second aspect or any embodiment thereof.

According to an eighteenth aspect, there is provided a computer program product including computer program instructions, wherein the computer program instructions are used for causing a computer to implement the method according to the forgoing third aspect or any embodiment thereof.

According to a nineteenth aspect, there is provided a computer program, which, when running on a computer, causes the computer to implement the method according to the forgoing first aspect or any embodiment thereof.

According to a twentieth aspect, there is provided a computer program, which, when running on a computer, causes the computer to implement the method according to the forgoing second aspect or any embodiment thereof.

According to a twenty first aspect, there is provided a computer program, which, when running on a computer, causes the computer to implement the method according to the forgoing third aspect or any embodiment thereof.

According to a twenty second aspect, there is provided a communication system including a network device and a terminal device.

The terminal device is configured to determine a measurement mode of RRM measurement in multiple measurement modes.

The network device is configured to send second indication information, wherein the second indication information is used for indicating the measurement mode of the RRM measurement in multiple measurement modes.

Alternatively, the network device is configured to send first indication information, wherein the first indication information is used for indicating a threshold corresponding to each of at least one measurement parameter used by the RRM measurement, and the threshold corresponding to each of the at least one measurement parameter is used by a terminal device for determining a measurement mode of the RRM measurement in multiple measurement modes.

In some embodiment, the multiple measurement modes include: performing the RRM measurement only on a serving cell of the terminal device; not performing the RRM measurement; performing intra-frequency measurement based on first information configured for measurement; performing inter-frequency measurement or inter-RAT measurement based on the first information configured for measurement; performing intra-frequency measurement based on second information configured for measurement; and performing inter-frequency measurement or inter-RAT measurement based on the second information configured for measurement.

Based on the above technical solution, the measurement modes that can be selected when the terminal device performs RRM measurement include not only the RRM measurement based on the second information configured for measurement, but also the RRM measurement based on the first information configured for measurement, so that the terminal device can have more measurement modes available for selection, thereby selecting an appropriate measurement mode according to the measurement to reduce the power consumption of the terminal device.

### BRIEF DESCRIPTION OF THE DRAWINGS

FIG. 1 is a schematic diagram of a possible wireless communication system applied in some embodiments of the application.
FIG. 2 is a schematic flowchart of an RRM measurement method according to some embodiments of the application.
FIG. 3 is a schematic diagram of neighboring or close cells of a terminal device.
FIG. 4 is a schematic flowchart of an RRM measurement method according to some embodiments of the application.
FIG. 5 is a block diagram of a terminal device according to some embodiments of the application.
FIG. 6 is a block diagram of a network device according to some embodiments of the application.
FIG. 7 is a block diagram of a communication device according to some embodiments of the application.
FIG. 8 is a block diagram of a chip according to some embodiments of the application.
FIG. 9 is a block diagram of a communication system according to some embodiments of the application.

### DETAILED DESCRIPTION

The technical solutions in the embodiments of the application will be described below in conjunction with the drawings of the embodiments of the application.

The technical solutions according to the embodiments of the application can be applied to various communication systems, for example, Global System of Mobile communication (GSM) system, Code Division Multiple Access (CDMA) system, Wideband Code Division Multiple Access (WCDMA) system, General Packet Radio Service (GPRS), Long Term Evolution (LTE) system, LTE Frequency Division Duplex (FDD) system, LTE Time Division Duplex (TDD) system, advanced LTE (LTE-A) system, New Radio (NR) system, evolution system of NR system, LTE-based access to unlicensed spectrum (LTE-U) system, NR-based access to unlicensed spectrum (NR-U) system, Universal Mobile Telecommunication System (UMTS), Worldwide Interoperability for Microwave Access (WiMAX) communication system, wireless local area network (WLAN), wireless fidelity (WiFi), next-generation communication system or other communication systems.

Generally speaking, traditional communication systems support a limited number of connections and are easy to implement. However, with the development of communication technologies, mobile communication systems will not only support traditional communication, but also support, for example, device to device (D2D) communication, machine-to-machine (M2M) communication, machine-type communication (MTC), vehicle-to-vehicle (V2V) communication, and the like. The embodiments of the application can also be applied to these communications system.

Optionally, the communication system in the embodiments of the application may be applied in scenarios such as carrier aggregation (CA), dual connectivity (DC), and standalone (SA) networking.

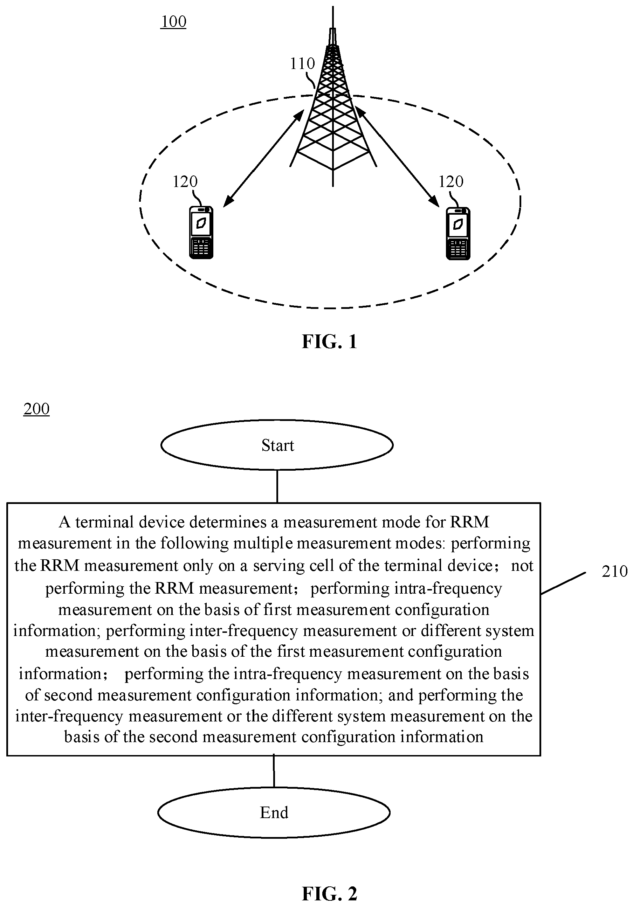

Exemplarily, the communication system 100 applied in the embodiments of the application is shown in FIG. 1. The wireless communication system 100 may include an access network device 110. The access network device 110 may be a device that communicates with a terminal device. The access network device 110 may provide communication coverage for a specific geographic area, and may communicate with terminal devices located within the coverage area. Optionally, the access network device 100 may be a base transceiver station (BTS) in GSM system or CDMA system, a NodeB (NB) in WCDMA system, an evolutional Node B (eNB or eNodeB) in LTE system, or a network side device in NR system, or a wireless controller in cloud radio access network (CRAN). Alternatively, the network device may be a relay station, an access point, vehicle-mounted equipment, wearable equipment, a network side device in the next-generation network or in a future-evolved public land mobile network (PLMN).

The wireless communication system 100 further includes at least one terminal device 120 located within the coverage of the access network device 110. The terminal device 120 may be mobile or fixed. Optionally, the terminal device 120 may be referred to as access terminal, user equipment (UE), user unit, user station, mobile station, mobile site, remote station, remote terminal, mobile device, user terminal, terminal, wireless communication device, user agent or user device. The access terminal may include cellular phones, cordless phones, session initiation protocol (SIP) phones, wireless local loop (WLL) stations, personal digital assistant (PDA), handheld devices or computing devices provided with wireless communication function, or other processing devices, in-vehicle devices, wearable devices connected to a wireless modem, terminal devices in the 5G network, or terminal devices in a future-evolved PLMN. Optionally, a device to device (D2D) communication may be performed between the terminal devices 120.

The network device 110 may provide services to a cell, and the terminal device 120 communicates with the network device 110 through transmission resources (e.g., frequency domain resources, or spectrum resources) used by the cell, and the cell may correspond to the network device 110 (e.g., base station). The cell may belong to a macro base station, or a base station corresponding to a small cell. The small cell may include, for example, a metro cell, a micro cell, and a pico cell, a femto cell, and the like. These small cells have the characteristics of small coverage and low transmission power, and are suitable for providing high-speed data transmission services.

FIG. 1 exemplarily illustrates one network device and two terminal devices. Optionally, the wireless communication system 100 may include multiple network devices and each network device may include other numbers of terminal devices within the coverage area. Embodiments of the application are not limited thereto. In addition, the wireless communication system 100 may further include other network entities such as a network controller and a mobility management entity, which are not limited in the embodiments of the application.

The terminal device may perform RRM measurement in different states, and the RRM measurement may include intra-frequency measurement, inter-frequency measurement, and inter-RAT measurement. In a radio resource control (RRC) idle state (RRC idle), the terminal device needs to perform intra-frequency measurement or inter-frequency measurement to support mobility operations according to the measurement, such as performing cell reselection. In the RRC connected state (RRC connected), the terminal device needs to continuously perform intra-frequency measurement or inter-frequency measurement based on configuration of the network device to support mobility operations, such as performing cell handover.

In order to reduce the power consumption of the terminal device, when the terminal device in the idle state performs the intra-frequency measurement, if a measurement of a serving cell, for example, a measurement of reference signal receiving power (RSRP) is greater than a corresponding RSRP threshold, and a measurement of reference signal receiving quality (RSRQ) is greater than a corresponding RSRQ threshold, the terminal device may not perform the intra-frequency measurement. Otherwise, it is necessary to perform the intra-frequency measurement. This rule may also be called S measurement criterion (S-measure).

For the terminal device in the idle state, when performing inter-frequency measurement or inter-RAT (inter-radio access technologies) measurement, the terminal device needs to perform the inter-frequency measurement or inter-RAT measurement for a frequency having a higher priority than the currently used frequency. For a frequency having a priority lower than or equal to the currently used frequency, according to the S-measure criterion, if the measurement of the serving cell, for example, the RSRP measurement is greater than the corresponding RSRP threshold, and the RSRQ measurement is greater than the corresponding RSRQ threshold, the terminal device may not perform the inter-frequency measurement or inter-RAT measurement; otherwise, the inter-frequency measurement or inter-RAT measurement needs to be performed.

The priority of frequency may also be referred to as a reselection priority. When the terminal device reselects a frequency, it will preferentially select the frequency with a higher priority to use. Therefore, for a frequency higher than the current NR frequency, the terminal device needs to perform RRM measurement; and for a frequency lower than the current NR frequency, the terminal device can determine whether to perform RRM measurement based on the S-measure criterion.

For the terminal device in connected state, the terminal device may perform RRM measurement based on the above S-measure criterion. If the RSRP measurement is greater than the corresponding RSRP threshold and the RSRQ measurement is greater than the corresponding RSRQ threshold, the terminal device may perform RRM measurement only on the serving cell without performing measurement outside the serving cell; otherwise, RRM measurement needs to be performed according to the configuration of the measurement object (Measurement Object, MO).

However, the above method still cannot meet the power consumption requirements of the terminal device. In order to further reduce the power consumption of the terminal device, embodiments of the application propose an RRM measurement method. Based on the method, the measurement modes that can be selected when the terminal device performs RRM measurement include not only the RRM measurement based on the second information configured for measurement, but also the RRM measurement based on the first information configured for measurement, so that the terminal device can have more measurement modes available for selection, thereby selecting an appropriate measurement mode according to the measurement to reduce the power consumption of the terminal device.

FIG. 2 is a schematic flowchart of a method 200 for RRM measurement according to some embodiments of the application. The method described in FIG. 2 may be executed by a terminal device, and the terminal device may be, for example, the terminal device 120 shown in FIG. 1. As shown in FIG. 2, the method 200 for RRM measurement may include a part or all of the following steps.

In 210, the terminal device determines a measurement mode of the RRM measurement in the following multiple measurement modes:
performing the RRM measurement only on a serving cell of the terminal device;
not performing the RRM measurement;
performing intra-frequency measurement based on first information configured for measurement;
performing inter-frequency measurement or inter-RAT measurement based on the first information configured for measurement;
performing intra-frequency measurement based on second information configured for measurement; and
performing inter-frequency measurement or inter-RAT measurement based on the second information configured for measurement.

Based on the embodiments, the possible measurement modes of RRM measurement performed by the terminal device include RRM measurement based on multiple types of information configured for measurement, for example, not only the RRM measurement based on the second information configured for measurement in related art, but also the RRM measurement based on the first information configured for measurement, so that the terminal device can select appropriate information configured for measurement according to current channel condition when performing the RRM measurement based on the information configured for measurement, thereby reducing the power consumption of the terminal device.

The first information configured for measurement includes, for example, at least one of the following measurement objects: synchronization signal block measurement time configuration (also referred to as SSPBCH block measurement time configuration, SMTC), a pattern of measured synchronization signal block (also referred to as Synchronizing Signal/PBCH Block, SSB or SS/PBCH Block), a pattern of measured time slot, a list of measured cell identities, and the like.

The second information configured for measurement includes, for example, at least one of the following measurement objects: SMTC, a pattern of measured SSB, a pattern of measured time slot, a list of measured cell identities and the like.

In some embodiments, the SSB pattern (also referred to as SSB-ToMeasure) measured by the terminal device is a collection of SSB sending positions of all cells to be measured; the slot pattern (also referred to as Slot-ToMeasure) measured by the terminal device covers time slots where the reference signal to be measured is located; the list of cells (also referred to as Cell-ID lists) measured by the terminal device includes the cells to be measured by the terminal device.

Optionally, the measurement object in the first information configured for measurement is a subset of the measurement objects in the second information configured for measurement.

For example, the first information configured for measurement includes only the SSB sending positions of neighboring or close cells, and the second information configured for measurement includes the SSB sending positions of more cells; and/or, the first information configured for measurement includes only reference signals sent by neighboring or close cells, so the number of measured time slots is small, and the second information configured for measurement includes reference signals sent by more cells, so the number of measured time slots is larger; and/or, the first information configured for measurement includes only Cell-ID lists of neighboring or close cells, and the number of cells to be measured is small, while the second information configured for measurement includes Cell-ID lists of more cells, and the number of cells to be measured is larger.

The terminal device may choose to perform RRM measurement based on the first information configured for measurement or the second information configured for measurement according to the current channel condition. For example, when the channel condition is relatively good, RRM measurement is performed only for the serving cell or not performed; when the channel condition is moderate, RRM measurement is performed based on the first information configured for measurement; when the channel condition is poor, RRM measurement is performed based on the second information configured for measurement. Since it is not necessary to always perform RRM measurement based on the second information configured for measurement, and more measurement modes can be selected, for example, RRM measurement can be performed based on the first information configured for measurement, so unnecessary power consumption of the terminal device can be reduced.

The embodiments of the present application include two RRM measurement modes, which are described separately below.

### Manner I

Optionally, in 210, the terminal device determines the measurement mode of the RRM measurement in multiple measurement modes includes: the terminal device determines the measurement mode according to a measurement of at least one measurement parameter used for the RRM measurement, and a threshold corresponding to each of the at least one measurement parameter.

The at least one measurement parameter may include, for example, at least one of the following measurement parameters: reference signal receiving power (RSRP), reference signal receiving quality (RSRQ), reference signal-signal to interference plus noise ratio (RS-SINR), moving speed of the terminal device, temporal change rate of RSRP, temporal change rate of RSRQ, temporal change rate of RS-SINR, a measured number of cells and the like.

The terminal device may determine the measurement mode according to the magnitude relationship between the at least one measurement parameter and the corresponding threshold respectively.

For example, the at least one measurement parameter includes a first measurement parameter and a second measurement parameter. If the first measurement parameter and/or the second measurement parameter are greater than their corresponding first thresholds, respectively, the terminal device determines the measurement mode as not to perform RRM measurement or only perform RRM measurement on the serving cell. If the first measurement parameter and/or the second measurement parameter are greater than their corresponding second thresholds and less than their corresponding first thresholds, the terminal device determines the measurement method as to perform RRM measurement based on the first information configured for measurement. If the first measurement parameter and/or the second measurement parameter are less than their corresponding second thresholds, the terminal device determines the measurement mode as to perform RRM measurement based on the second information configured for measurement.

For another example, if the first measurement parameter and/or the second measurement parameter are greater than their corresponding first thresholds, RRM measurement is only performed on the serving cell or no RRM measurement is performed. If the first measurement parameter and/or the second measurement parameter are greater than their corresponding second thresholds and less than their corresponding first thresholds, and the third measurement parameter is less than its corresponding third threshold, RRM measurement is performed based on the first information configured for measurement. Otherwise, RRM measurement is performed based on the second information configured for measurement.

For another example, if the first measurement parameter and/or the second measurement parameter are greater than their corresponding first thresholds, the RRM measurement is only performed on the serving cell or the RRM measurement is not performed. If the first measurement parameter and/or the second measurement parameter are less than their corresponding first thresholds, and the third measurement parameter is less than its corresponding third threshold, RRM measurement is performed based on the first information configured for measurement; if the first measurement parameter and/or the second measurement parameter are less than their corresponding first thresholds, and the third measurement parameter is greater than or equal to its corresponding third threshold, RRM measurement is performed based on the second information configured for measurement.

The embodiments of the application do not limit the quantity of the at least one measurement parameter; and each measurement parameter may correspond to one or more measurement thresholds, and different measurement parameters among the at least one measurement parameter may also correspond to different numbers of measurement thresholds.

For example, each measurement parameter may correspond not only to the first threshold, but also to the second threshold or more thresholds. Correspondingly, the embodiments of the application take RRM measurement based on the two types of RRM information configured for measurement only as an example, that is, the multiple measurement modes include RRM measurement based on the first information configured for measurement and RRM measurement based on the second information configured for measurement, but the application is not limited thereto. The multiple measurement modes may further include RRM measurement based on more information configured for measurement, so as to further subdivide the measurement modes and provide more selections for the terminal device.

As long as the comparison result between the measurement of the measurement parameter and its corresponding threshold is used for the selection among the above-mentioned various measurement modes, it shall fall within the protection scope of the present application.

In the following, the measurement at different states and different frequency points of the terminal device will be described separately.
(1) The terminal device is in the RRC connected state.

Optionally, the terminal device determines the measurement mode according to the measurement of at least one measurement parameter used in the RRM measurement and the threshold corresponding to the at least one measurement parameter, includes:
determining, by the terminal device, to perform the RRM measurement only on the serving cell if the measurement of a part or all of the at least one measurement parameter is greater than its corresponding first threshold;
determining, by the terminal device, to perform the RRM measurement based on the first information configured for measurement if the measurement of a part or all of the at least one measurement parameter is greater than its corresponding second threshold and less than its corresponding first threshold; and
determining, by the terminal device, to perform the RRM measurement based on the second information configured for measurement if the measurement of a part or all of the at least one measurement parameter is less than the corresponding second threshold.

For example, the terminal device is in the RRC connected state, and the at least one measurement parameter includes RSRP and RSRQ. If the RSRP of the serving cell of the terminal device is greater than the first RSRP threshold, and/or the RSRQ of the serving cell is greater than the first RSRQ threshold, the terminal device performs RRM measurement only on the serving cell. If the RSRP of the serving cell is greater than the second RSRP threshold and less than the first RSRP threshold, and/or, if the RSRQ of the serving cell is greater than the second RSRQ threshold and less than the first RSRQ threshold, the terminal device performs intra-frequency measurement, inter-frequency measurement, or inter-RAT measurement based on the first information configured for measurement. If the RSRP of the serving cell is less than the second RSRP threshold, and/or the RSRQ of the serving cell is less than the second RSRQ threshold, the terminal device performs intra-frequency measurement, inter-frequency measurement, or inter-RAT measurement based on the second information configured for measurement.
(2) The terminal device is in the RRC idle state, and the RRM measurement includes the intra-frequency measurement.

Optionally, the terminal device determines the measurement mode according to the measurement of at least one measurement parameter used in the RRM measurement and the threshold corresponding to the at least one measurement parameter, includes:
determining, by the terminal device, not to perform the intra-frequency measurement if the measurement of a part or all of the at least one measurement parameter is greater than its corresponding first threshold;
determining, by the terminal device, to perform the intra-frequency measurement based on the first information configured for measurement if the measurement of a part or all of the at least one measurement parameter is greater than its corresponding second threshold and less than its corresponding first threshold; and
determining, by the terminal device, to perform the intra-frequency measurement based on the second information configured for measurement if the measurement of a part or all of the at least one measurement parameter is less than the corresponding second threshold.

For example, the terminal device is in the RRC idle state, and the at least one measurement parameter includes RSRP and RSRQ. If the RSRP of the serving cell of the terminal device is greater than the first RSRP threshold, and/or the RSRQ of the serving cell is greater than the first RSRQ threshold, the terminal device may choose not to perform intra-frequency measurement. If the RSRP of the serving cell is greater than the second RSRP threshold and less than the first RSRP threshold, and/or if the RSRQ of the serving cell is greater than the second RSRQ threshold and less than the first RSRQ threshold, the terminal device performs intra-frequency measurement based on the first information configured for measurement. If the RSRP of the serving cell is less than the second RSRP threshold, and/or, the RSRQ of the serving cell is less than the second RSRQ threshold, the terminal device performs intra-frequency measurement based on the second information configured for measurement.
(3) The terminal device is in the RRC idle state, and the RRM measurement includes inter-frequency measurement or inter-RAT measurement.

In one case, the priority of frequency points for inter-frequency measurement or inter-RAT measurement is lower than or equal to the priority of the currently used frequency point, that is, for the measurement of frequency points having a priority lower than or equal to the current frequency point, optionally, the terminal device determines the measurement mode according to the measurement of the at least one measurement parameter used by the RRM measurement and the threshold corresponding to the at least one measurement parameter, includes:
determining, by the terminal device, not to perform the inter-frequency measurement or inter-RAT measurement if the measurement of a part or all of the at least one measurement parameter is greater than its corresponding first threshold;
determining, by the terminal device, to perform the inter-frequency measurement or inter-RAT measurement based on the first information configured for measurement if the measurement of a part or all of the at least one measurement parameter is greater than its corresponding second threshold and less than its corresponding first threshold; and
determining, by the terminal device, to perform the inter-frequency measurement or inter-RAT measurement based on the second information configured for measurement if the measurement of a part or all of the at least one measurement parameter is less than the corresponding second threshold.

For example, the terminal device is in the RRC idle state, and the at least one measurement parameter includes RSRP and RSRQ. For a frequency to be measured or an inter-RAT frequency having a priority lower than or equal to the priority of the current frequency, if the RSRP of the serving cell of the terminal device is greater than the first RSRP threshold, and/or the RSRQ of the serving cell is greater than the first RSRQ threshold, the terminal device may choose not to perform inter-frequency measurement or inter-RAT measurement; if the RSRP of the serving cell is greater than the second RSRP threshold and less than the first RSRP threshold, and/or, the RSRQ of the serving cell is greater than the second RSRQ threshold and less than the first RSRQ threshold, the terminal device performs inter-frequency measurement or inter-RAT measurement based on the first information configured for measurement; if the RSRP of the serving cell is less than the second RSRP threshold and/or the RSRQ of the serving cell is less than the second RSRQ threshold, the terminal device performs inter-frequency measurement or inter-RAT measurement based on the second information configured for measurement.

In another case, the priority of frequency points of inter-frequency measurement or inter-RAT measurement is higher than the priority of currently used frequency points, that is, for the measurement of frequency points having a priority higher than the priority of the current frequency point, optionally, the terminal device determines the measurement mode according to the measurement of the at least one measurement parameter used by the RRM measurement and the threshold corresponding to the at least one measurement parameter, includes: the terminal device determines to perform inter-frequency measurement or inter-RAT measurement based on the second information configured for measurement.

For example, the terminal device is in the RRC idle state, and the at least one measurement parameter includes RSRP and RSRQ. For a frequency point to be measured or an inter-RAT frequency point having a higher priority than the current frequency point, regardless of the measurements of RSRP and RSRQ, the terminal device performs the inter-frequency measurement or the inter-RAT measurement based on the second information configured for measurement.

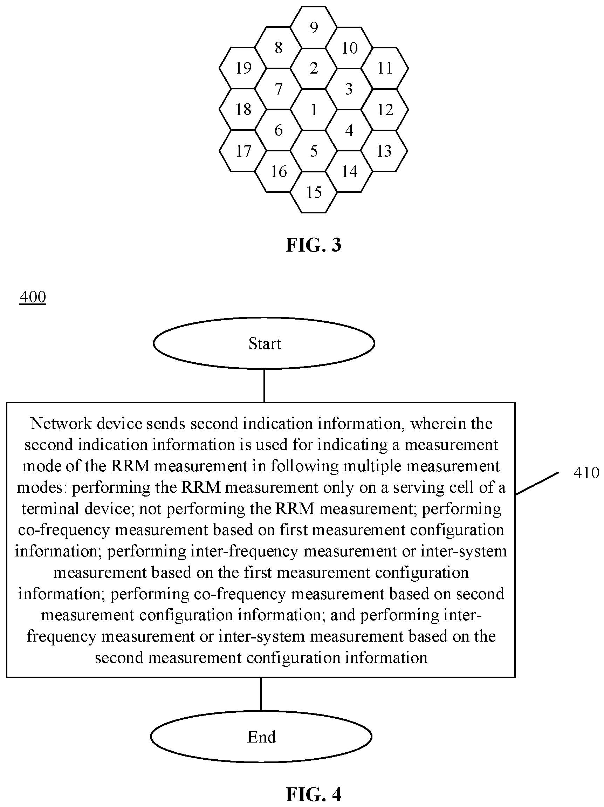

For a clearer explanation, it is assumed that the measurement cell list in the first information configured for measurement includes only neighboring or close cells. For example, as shown in FIG. 3, the serving cell of the terminal device is cell 1, and the neighboring or close cells include cell 2, cell 3, cell 4, cell 5, cell 6, and cell 7. The measurement cell list in the second information configured for measurement includes more cells. For example, as shown in FIG. 3, the cells to be measured by the terminal device include cell 2 to cell 15. Whether it is the RRM measurement for the terminal device in the RRC idle state for the purpose of cell reselection, or the RRM measurement for the terminal device in the RRC connected state for the purpose of cell handover, it is most meaningful for the terminal device to perform measurements on the closest cells to the serving cell where the terminal device is located, because it is precisely these cells that may become the reselection cell or handover cell due to the location movement of the terminal device in the subsequent period. In particular, for a terminal in a stationary state or a low-speed mobile state, the RRM measurement of the nearest few cells may be sufficient to support the mobility measurement of the terminal device for a considerable period of time, because the terminal may be always within the area of the nearest cells during a relatively long period of time.

Therefore, if the measured value of RSRP is greater than the first RSRP threshold, and/or the measured value of RSRQ is greater than the first RSRQ threshold, the terminal device may choose not to perform RRM measurement or only perform RRM measurement on the serving cell to reduce unnecessary power consumption. If the measured value of RSRP is greater than the second RSRP threshold and less than the first RSRP threshold, and/or the measured value of RSRQ is greater than the second RSRQ threshold and less than the first RSRQ threshold, the terminal device performs RRM based on the first information configured for measurement, that is, performing RRM measurement only on cell 2 to cell 7 to reduce unnecessary power consumption. If the measured value of RSRP is less than the second RSRP threshold, and/or the measured value of RSRQ is less than the second RSRQ threshold, the terminal device performs RRM measurement based on the second information configured for measurement, that is, the RRM measurement is performed on all the cells 2 to 19 to meet the requirement of mobility measurement.

In some embodiments of the application, in addition to the above-mentioned RSRP and RSRQ, optionally, at least one measurement parameter for performing RRM measurement may also include the moving speed of the terminal device, the temporal change rate of RSRP, the temporal change rate of RSRQ, temporal change rate of RS-SINR and the like. Hereinafter, the moving speed of the terminal device, the temporal change rate of RSRP, the temporal change rate of RSRQ, and the temporal change rate of RS-SINR are collectively referred to as the moving speed. The terminal device may select the measurement mode to be used among the aforementioned multiple measurement modes according to the moving speed.

For example, the terminal device is in the RRC connected state, and the at least one measurement parameter includes RSRP, RSRQ, and moving speed. If the RSRP of the serving cell of the terminal device is greater than the first RSRP threshold, and/or the RSRQ of the serving cell is greater than the first RSRQ threshold, the terminal device performs RRM measurement only on the serving cell.

If the RSRP of the serving cell is greater than the second RSRP threshold and less than the first RSRP threshold, and/or the RSRQ of the serving cell is greater than the second RSRQ threshold and less than the first RSRQ threshold, and the moving speed of the terminal device is less than the speed threshold, the terminal device performs RRM measurement based on the first information configured for measurement. At this time, although the signal of the terminal device is relatively weak, the moving speed of the terminal device is small, so it may be within the coverage of adjacent or close cells for a long time. Therefore, the RRM measurement of these cells is enough for mobility measurement of the terminal.

If the RSRP of the serving cell is greater than the second RSRP threshold and less than the first RSRP threshold, and/or, the RSRQ of the serving cell is greater than the second RSRQ threshold and less than the first RSRQ threshold, and the moving speed of the terminal device is greater than or equal to the speed threshold , the terminal performs RRM measurement based on the second information configured for measurement. Alternatively, if the RSRP of the serving cell is less than the second RSRP threshold, and/or the RSRQ measurement value of the serving cell is less than the second RSRQ threshold, the terminal device performs RRM measurement based on the second information configured for measurement.

For another example, if the RSRP of the serving cell of the terminal device is greater than the first RSRP threshold, and/or the RSRQ of the serving cell is greater than the first RSRQ threshold, the terminal device performs RRM measurement only on the serving cell. If the RSRP of the serving cell of the terminal device is less than the first RSRP threshold, and/or the RSRQ of the serving cell is less than the first RSRQ threshold, and the moving speed of the terminal device is less than the speed threshold, the terminal device performs RRM measurement based on the first information configured for measurement. If the RSRP of the serving cell of the terminal device is less than the first RSRP threshold, and/or the RSRQ of the serving cell is less than the first RSRQ threshold, and the moving speed of the terminal device is greater than the speed threshold, the terminal device performs RRM measurement based on the second information configured for measurement.

Optionally, the method further includes: the terminal device acquires thresholds corresponding to the at least one measurement parameter stored in the terminal device; or, the terminal device receives first indication information sent by the network device, the first indication information is indicative of the thresholds corresponding to the at least one measured parameter.

The first indication information is carried in, for example, radio resource control (RRC) signaling, medium access control (MAC) signaling, or a broadcast message.

Optionally, the thresholds corresponding to the measurement parameters used by the terminal device in the RRC connected state is the same as or different from the thresholds corresponding to the same measurement parameters used by the terminal device in the RRC idle state.

For example, the first RSRP threshold corresponding to the RSRP used by the terminal device in the RRC connection state is different from the first RSRP threshold corresponding to the RSRP used by the terminal device in the RRC idle state; and/or, the second RSRP threshold corresponding to the RSRP used by the terminal device in the RRC connection state is different from the second RSRP threshold corresponding to the RSRP used by the terminal device in the RRC idle state; and/or, the first RSRQ threshold corresponding to the RSRQ used by the terminal device in the RRC connection state is different from the first RSRQ threshold corresponding to the RSRQ used by the terminal device in the RRC idle state; and/or the second RSRQ threshold corresponding to the RSRQ used by the terminal device in the RRC connected state is different from the second RSRQ threshold corresponding to the RSRQ used by the terminal device in the RRC idle state.

Optionally, the first information configured for measurement used when the terminal device performs the RRM measurement on different frequency points is the same or different, and/or the second information configured for measurement used when the terminal device performs the RRM measurement on different frequency points is the same or different.

For example, the first information configured for measurement used when the terminal device performs the RRM measurement on the frequency point f₁ is different from the first information configured for measurement used when the terminal device performs the RRM measurement on the frequency point f₂ ; and/or, the second information configured for measurement used when the terminal device performs the RRM measurement on the frequency point f₁ is different from the second information configured for measurement used when the terminal device performs the RRM measurement on the frequency point f₂.

### Manner II

Optionally, the method further includes: the terminal device receives second indication information, where the second indication information is used for indicating the measurement mode of the RRM measurement among the multiple measurement modes.

In some embodiments, in 210, the terminal device determines the measurement mode of the RRM measurement in the following multiple measurement modes, includes: the terminal device determines the measurement mode of the RRM measurement according to the second indication information.

That is to say, with respect to the measurement mode among the various measurement modes used by the terminal device, the network device can notify the terminal device through the second indication information.

In some embodiments, the second indication information is carried in PDCCH, RRC signaling, MAC signaling or broadcast message.

Optionally, the method further includes: the terminal device acquires the first information configured for measurement and/or the second information configured for measurement stored in the terminal device; or, the terminal device receives third indication information, the third indication information is used for indicating the first information configured for measurement and/or the second information configured for measurement.

The third indication information is, for example, carried in RRC signaling, MAC signaling, or broadcast message.

FIG. 4 is a schematic flowchart of a method 400 for RRM measurement according to an embodiment of the application. The method described in FIG. 4 may be performed by a network device, and the network device may be, for example, the network device 110 shown in FIG. 1. As shown in FIG. 4, the RRM measurement method 400 may include a part or all of the following steps.

In 410, the network device sends second indication information, wherein the second indication information is used for indicating a measurement mode of the RRM measurement in following multiple measurement modes:
performing the RRM measurement only on a serving cell of a terminal device;
not performing the RRM measurement;
performing intra-frequency measurement based on first information configured for measurement;
performing inter-frequency measurement or inter-RAT measurement based on the first information configured for measurement;
performing intra-frequency measurement based on second information configured for measurement; and
performing inter-frequency measurement or inter-RAT measurement based on the second information configured for measurement.

In some embodiment, the second indication information is, for example, carried in PDCCH, RRC signaling, MAC signaling, or a broadcast message.

Optionally, the method further includes: sending, by the network device, third indication information, wherein the third indication information is used for indicating the first information configured for measurement and/or the second information configured for measurement.

In some embodiment, the third indication information is carried in RRC signaling, MAC signaling, or a broadcast message.

In the embodiments, the network device may determine the measurement mode of the RRM measurement among the multiple measurement modes based on the manner to the terminal device, that is, the aforementioned manner 1. For example, the network device may determine the measurement mode according to the measurement of the at least one measured parameter reported by the terminal device and compare it with the threshold corresponding to the at least one measured parameter. Alternatively, the network device may determine the measurement mode to be used by itself based on the information reported by the terminal device, such as the measurement of the above-mentioned measurement parameter, the position and speed of the terminal device, and notify the terminal device of the measurement mode through the second indication information.

The embodiments of the application also provide a method for RRM measurement. The method includes: the network device sends first indication information to the terminal device, where the first indication information is used for indicating a threshold corresponding to each of the at least one measurement parameter used by the RRM measurement.

In some embodiments, the threshold corresponding to each of the at least one measurement parameter may be used by the terminal device to determine the measurement mode of the RRM measurement.

For example, the network device sends first indication information to the terminal device to notify the terminal device of the measurement threshold corresponding to each of the at least one measurement parameter. The terminal device may determine the measurement mode of the RRM measurement according to the measurements of the at least one measurement parameter used for the RRM measurement and the threshold corresponding to each of the at least one measurement parameter.

The at least one measurement parameter may include, for example, at least one of the following measurement parameters: RSRP, RSRQ, RS-SINR, the moving speed of the terminal device, the temporal change rate of RSRP, the temporal change rate of RSRQ, and the temporal change of RS-SINR, and the number of measured cells.

The terminal device may determine the measurement mode according to the magnitude relationship between the at least one measurement parameter and the corresponding threshold respectively. For the specific process of determining the measurement mode by the terminal device, reference may be made to the foregoing related description for FIG. 2, which will not be repeated here for brevity.

In some embodiment, the first indication information may be, for example, carried in RRC signaling, MAC signaling, or broadcast messages.

Optionally, the method further includes: the network device sends third indication information to the terminal device, where the third indication information is used for indicating the first information configured for measurement and/or the second information configured for measurement. The third indication information may be, for example, carried in RRC signaling, MAC signaling, or broadcast messages.

It should be noted that, the embodiments described in this application and/or the technical features in each embodiment can be arbitrarily combined with each other without conflict, and the technical solution obtained after the combination should also fall within the protection scope of this application.

It should be understood that in various embodiments of the application, the size of the sequence numbers of the above processes does not mean that the execution order is sequential, and the execution order of each process should be determined by its function and inherent logic, and should not constitute any limitation on the implementation process of the embodiments of the application.

The communication method according to the embodiments of the application is described in detail above. The device according to the embodiments of the application will be described below with reference to FIGs. 4 to 8. The technical features described in the method embodiments are applicable to the following device embodiments.

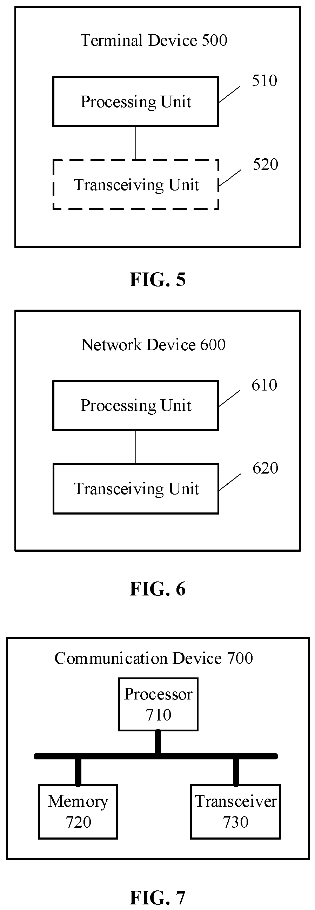

FIG. 5 is a block diagram of a terminal device 500 according to an embodiment of the application. As shown in FIG. 5, the terminal device 500 includes a processing unit 510. In some embodiments, the processing unit 510 is configured to:
determine a measurement mode of radio resource management RRM measurement in following multiple measurement modes:
performing the RRM measurement only on a serving cell of the terminal device;
not performing the RRM measurement;
performing intra-frequency measurement based on first information configured for measurement;
performing inter-frequency measurement or inter-RAT measurement based on the first information configured for measurement;
performing intra-frequency measurement based on second information configured for measurement; and
performing inter-frequency measurement or inter-RAT measurement based on the second information configured for measurement.

Accordingly, the measurement modes that can be selected when the terminal device performs RRM measurement include not only the RRM measurement based on the second information configured for measurement, but also the RRM measurement based on the first information configured for measurement, so that the terminal device can have more measurement modes available for selection, thereby selecting an appropriate measurement mode according to the measurement to reduce the power consumption of the terminal device.

Optionally, the processing unit 510 is specifically configured to: determine the measurement mode according to a measurement of at least one measurement parameter used for the RRM measurement, and a threshold corresponding to each of the at least one measurement parameter.

Optionally, the at least one measurement parameter includes at least one of following measurement parameters: reference signal receiving power RSRP, reference signal receiving quality RSRQ, reference signal-signal to interference plus noise ratio RS-SINR, moving speed of the terminal device, temporal change rate of RSRP, temporal change rate of RSRQ, temporal change rate of RS-SINR, and a measured number of cells.

Optionally, the terminal device is in a radio resource control RRC connected state, the processing unit 510 is specifically configured to: determine to perform the RRM measurement only on the serving cell if the measurement of a part or all of the at least one measurement parameter is greater than its corresponding first threshold; determine to perform the RRM measurement based on the first information configured for measurement if the measurement of a part or all of the at least one measurement parameter is greater than its corresponding second threshold and less than its corresponding first threshold; and determine to perform the RRM measurement based on the second information configured for measurement if the measurement of a part or all of the at least one measurement parameter is less than the corresponding second threshold.

Optionally, the terminal device is in an RRC idle state, and the RRM measurement includes intra-frequency measurement, the processing unit 510 is specifically configured to: determine not to perform the intra-frequency measurement if the measurement of a part or all of the at least one measurement parameter is greater than its corresponding first threshold; determine to perform the intra-frequency measurement based on the first information configured for measurement if the measurement of a part or all of the at least one measurement parameter is greater than its corresponding second threshold and less than its corresponding first threshold; and determine to perform the intra-frequency measurement based on the second information configured for measurement if the measurement of a part or all of the at least one measurement parameter is less than the corresponding second threshold.

Optionally, the terminal device is in an RRC idle state, the RRM measurement includes inter-frequency measurement or inter-RAT measurement, and the inter-frequency measurement or inter-RAT measurement has a priority of frequency lower than or equal to a priority of a currently used frequency, the processing unit 510 is specifically configured to: determine not to perform the inter-frequency measurement or inter-RAT measurement if the measurement of a part or all of the at least one measurement parameter is greater than its corresponding first threshold; determine to perform the inter-frequency measurement or inter-RAT measurement based on the first information configured for measurement if the measurement of a part or all of the at least one measurement parameter is greater than its corresponding second threshold and less than its corresponding first threshold; and determine to perform the inter-frequency measurement or inter-RAT measurement based on the second information configured for measurement if the measurement of a part or all of the at least one measurement parameter is less than the corresponding second threshold.

Optionally, the terminal device is in an RRC idle state, the RRM measurement includes inter-frequency measurement or inter-RAT measurement, and the inter-frequency measurement or inter-RAT measurement has a priority of frequency higher than a priority of a currently used frequency, the processing unit 510 is specifically configured to: determine to perform the inter-frequency measurement or inter-RAT measurement based on the second information configured for measurement.

Optionally, the terminal device further includes a transceiving unit 520, wherein the processing unit 510 is further configured to: acquire the threshold corresponding to each of the at least one measurement parameter stored in the terminal device; or, control the transceiving unit 520 to receive first indication information, wherein the first indication information is used for indicating the threshold corresponding to each of the at least one measurement parameter.

Optionally, the first indication information is carried in radio resource control RRC signaling, media access control MAC signaling, or a broadcast message.

Optionally, a threshold corresponding to the measurement parameter used by the terminal device in an RRC connected state is same as or different from a threshold corresponding to the measurement parameter used by the terminal device in an RRC idle state.

Optionally, the first information configured for measurement used by the terminal device for performing the RRM measurement on different frequencies is the same or different, and/or the second information configured for measurement used by the terminal device for performing the RRM measurement on different frequencies is the same or different.

Optionally, the first information configured for measurement includes at least one of following measurement objects: synchronization signal block measurement time configuration SMTC, a pattern of measured synchronization signal block SSB, a pattern of measured time slot, and a list of measured cell identities.

Optionally, the second information configured for measurement includes at least one of following measurement objects: SMTC, a pattern of measured SSB, a pattern of measured time slot, and a list of measured cell identities.

Optionally, a measurement object in the first information configured for measurement is a subset of measurement objects in the second information configured for measurement.

Optionally, the terminal device further includes a transceiving unit 520 configured to: receive second indication information, wherein the second indication information is used for indicating the measurement mode of the RRM measurement among the multiple measurement modes; wherein the processing unit 510 is specifically configured to: determine the measurement mode of the RRM measurement according to the second indication information.

Optionally, the second indication information is carried in a physical downlink control channel PDCCH, radio resource control RRC signaling, medium access control MAC signaling, or a broadcast message.

Optionally, the terminal device further includes a transceiving unit 520, wherein the processing unit 510 is further configured to: acquire the first information configured for measurement and/or the second information configured for measurement stored in the terminal device; or, control the transceiving unit 520 to receive third indication information, wherein the third indication information is used for indicating the first information configured for measurement and/or the second information configured for measurement.

Optionally, the third indication information is carried in RRC signaling, MAC signaling, or a broadcast message.

It should be understood that the terminal device 500 may perform the corresponding operations performed by the terminal device in the above method 200, and for the sake of brevity, details are not described herein again.

FIG. 6 is a block diagram of a network device 600 according to an embodiment of the application. As shown in FIG. 6, the network device 600 includes a processing unit 610 and a transceiver unit 620.

The processing unit 610 is configured to generate second indication information, wherein the second indication information is used for indicating a measurement mode of radio resource management RRM measurement in multiple measurement modes.

The transceiving unit 620 is configured to send the second indication information;
wherein the multiple measurement modes include:
performing the RRM measurement only on a serving cell of a terminal device;
not performing the RRM measurement;
performing intra-frequency measurement based on first information configured for measurement;
performing inter-frequency measurement or inter-RAT measurement based on the first information configured for measurement;
performing intra-frequency measurement based on second information configured for measurement; and
performing inter-frequency measurement or inter-RAT measurement based on the second information configured for measurement.

Accordingly, the measurement modes that can be selected when the terminal device performs RRM measurement include not only the RRM measurement based on the second information configured for measurement, but also the RRM measurement based on the first information configured for measurement, so that the terminal device can have more measurement modes available for selection, thereby selecting an appropriate measurement mode according to the measurement to reduce the power consumption of the terminal device.

Optionally, the second indication information is carried in a physical downlink control channel PDCCH, radio resource control RRC signaling, medium access control MAC signaling, or a broadcast message.

Optionally, the transceiving unit 620 is specifically configured to send the first information configured for measurement and/or the second information configured for measurement.

Optionally, the first information configured for measurement and/or the second information configured for measurement is carried in RRC signaling, MAC signaling, or a broadcast message.

It should be understood that the network device 600 may perform the corresponding operations performed by the network device in the above method 400, and for the sake of brevity, details are not described herein again.

Embodiments of the application further provides a network device. The network device includes a processing unit and a transceiver unit.

The processing unit is configured to generate first indication information, wherein the first indication information is used for indicating a threshold corresponding to each of at least one measurement parameter used by radio resource management RRM measurement, and the threshold corresponding to each of the at least one measurement parameter is used by a terminal device for determining a measurement mode of the RRM measurement in multiple measurement modes.

The transceiving unit is configured to send the first indication information,
wherein the multiple measurement modes include:
performing the RRM measurement only on a serving cell of the terminal device;
not performing the RRM measurement;
performing intra-frequency measurement based on first information configured for measurement;
performing inter-frequency measurement or inter-RAT measurement based on the first information configured for measurement;
performing intra-frequency measurement based on second information configured for measurement; and
performing inter-frequency measurement or inter-RAT measurement based on the second information configured for measurement.

Accordingly, the measurement modes that can be selected when the terminal device performs RRM measurement include not only the RRM measurement based on the second information configured for measurement, but also the RRM measurement based on the first information configured for measurement, so that the terminal device can have more measurement modes available for selection, thereby selecting an appropriate measurement mode according to the measurement to reduce the power consumption of the terminal device.

Optionally, the first indication information is carried in RRC signaling, MAC signaling, or a broadcast message.

Optionally, the transceiving unit is further configured to: send third indication information, wherein the third indication information is used for indicating the first information configured for measurement and/or the second information configured for measurement.

Optionally, the third indication information is carried in RRC signaling, MAC signaling, or a broadcast message.

FIG. 7 is a block diagram of a communication device 700 according to an embodiment of the application. The communication device 700 shown in FIG. 7 includes a processor 710, which can call and run a computer program from a memory to implement the method according to the embodiments of the application.

Optionally, as shown in FIG. 7, the communication device 700 may further include a memory 420. The processor 710 may call and run the computer program from the memory 720 to implement the method according to the embodiments of the application.

The memory 720 may be a separate device independent of the processor 710, or may be integrated in the processor 710.

Optionally, as shown in FIG. 7, the communication device 700 may further include a transceiver 730, and the processor 710 may control the transceiver 730 to communicate with other devices. Specifically, it may send information or data to other devices, or receive information or data sent by other devices.

The transceiver 730 may include a transmitter and a receiver. The transceiver 730 may further include antennas, and the number of antennas may be one or more.

Optionally, the communication device 700 may be the terminal device according to any embodiments of the applicant and may implement the corresponding processes implemented by the terminal device in each method according to the embodiments of the application. For brevity, details are not repeated herein.

Optionally, the communication device 700 may be the network device according to any embodiments of the applicant and may implement the corresponding processes implemented by the network device in each method according to the embodiments of the application. For brevity, details are not repeated herein.

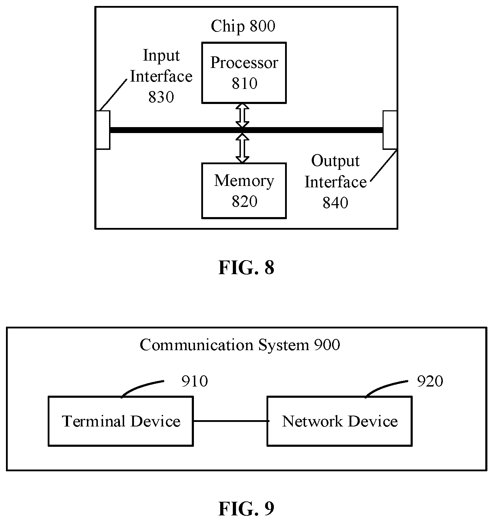

FIG. 8 is a block diagram illustrating a chip according to an embodiment of the application. The chip 800 shown in FIG. 8 includes a processor 810, which can call and run a computer program from a memory to implement the method according to the embodiments of the application.

Optionally, as shown in FIG. 8, the chip 800 may further include a memory 820. The processor 510 may call and run the computer program from the memory 820 to implement the method according to the embodiments of the application.

The memory 820 may be a separate device independent of the processor 810, or may be integrated in the processor 810.

Optionally, the chip 800 may further include an input interface 830. The processor 810 may control the input interface 830 to communicate with other devices or chips. Specifically, the processor 810 may acquire information or data sent by other devices or chips.

Optionally, the chip 800 may further include an output interface 840. The processor 810 may control the output interface 840 to communicate with other devices or chips. Specifically, the processor 810 may output information or data to the other devices or chips.

Optionally, the chip can be applied to the terminal device according to the embodiments of the application, and the chip can implement the corresponding process implemented by the terminal device in the method according to the embodiments of the application. For brevity, details are not described herein.

Optionally, the chip can be applied to the network device according to the embodiments of the application, and the chip can implement the corresponding process implemented by the network device in the method according to the embodiments of the application. For brevity, details are not described herein.

It should be understood that the chip mentioned in some embodiments of the application may also be referred to as a system-level chip, a system chip, a chip system or a system-on-chip.

The processor in the embodiments of the application may be an integrated circuit chip with signal processing capabilities. In the implementation process, each step of the foregoing method embodiment may be completed by an integrated logic circuit of hardware in a processor or instructions in the form of software. The aforementioned processor may be a general-purpose processor, a digital signal processor (DSP), an application specific integrated circuit (ASIC), a field programmable gate Array (FPGA), or other available programming logic devices, discrete gates or transistor logic devices, discrete hardware components, which can implement or execute the methods, steps, and logical block diagrams disclosed in the embodiments of the present application. The general-purpose processor may be a microprocessor or the processor may be any conventional processor or the like. The steps of the method disclosed with reference to the embodiments of the application may be directly embodied and executed by a hardware decoding processor, or may be executed and completed by a combination of hardware and software modules in the decoding processor. The software module may be located in a mature storage medium in the art, such as random access memory, flash memory, read-only memory, programmable read-only memory, or electrically erasable programmable memory, and registers. The storage medium is located in the memory, and the processor reads the information in the memory and completes the steps of the above method in combination with its hardware.

The memory mentioned in some embodiments of the application may be a volatile memory or a non-volatile memory, or may include both volatile and non-volatile memory. In some embodiments, the non-volatile memory may be read-only memory (ROM), programmable read-only memory (PROM), erasable programmable read-only memory (erasable PROM, EPROM), electrically erasable programmable read-only memory (electrically EPROM, EEPROM) or flash memory. The volatile memory may be a random access memory (RAM), which is used as an external cache. By way of exemplary but not restrictive illustration, many forms of RAM are available, for example, static random access memory (static RAM, SRAM), a dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synch link dynamic random access memory (synch link DRAM, SLDRAM), and direct Rambus random access memory (direct Rambus RAM, DR RAM) and so on. It should be noted that the memories of the systems and methods described herein are intended to include, but are not limited to these and any other suitable types of memories.

The above memory is exemplary but not limiting. For example, the memory in the embodiments of the application may also be static RAM (SRAM), dynamic RAM (DRAM), synchronous DRAM (SDRAM), double data rate SDRAM (DDR SDRAM), enhanced SDRAM (ESDRAM), synch link DRAM (SLDRAM) and direct Rambus RAM (DR RAM) and so on. That is to say, the memories in the embodiments of the application are intended to include but are not limited to these and any other suitable types of memories.

FIG. 9 is a block diagram of a communication system 900 according to an embodiment of the application. As shown in FIG. 9, the communication system 900 includes a terminal device 910 and a network device 920.

The terminal device 910 is configured to determine the measurement mode of RRM measurement in the following multiple measurement modes.

The network device 920 is configured to send second indication information, and the second indication information is used for indicating the measurement mode of RRM measurement in the following multiple measurement modes.

Alternatively, the network device 920 is configured to send first indication information, the first indication information is used for indicating a threshold corresponding to at least one measurement parameter used by the RRM measurement, and the threshold corresponding to each of the at least one measurement parameter is used by the terminal device 910 for determining the measurement mode of RRM measurement among the multiple measurement modes.

In some embodiments, the multiple measurement modes include: performing the RRM measurement only on a serving cell of the terminal device; not performing the RRM measurement; performing intra-frequency measurement based on first information configured for measurement; performing inter-frequency measurement or inter-RAT measurement based on the first information configured for measurement; performing intra-frequency measurement based on second information configured for measurement; and performing inter-frequency measurement or inter-RAT measurement based on the second information configured for measurement.

Optionally, the terminal device 910 may be configured to implement the corresponding functions implemented by the terminal device in the above method 200, and the composition of the terminal device 910 may be as shown by the terminal device 500 in FIG. 5, which will not be repeated here for brevity.

Optionally, the network device 920 may be configured to implement the corresponding functions implemented by the network device in the above method 300, and the composition of the network device 920 may be as shown by the network device 600 in FIG. 6, which will not be repeated here for brevity.

Embodiments of the disclosure further provide a computer readable storage medium, which is configured to store a computer program. Optionally, the computer readable storage medium may be applied to the network device in some embodiments of the application, and the computer program causes the computer to execute the corresponding process implemented by the network device in each method in some embodiments of the application. For the sake of brevity, details will not be repeated here. Optionally, the computer readable storage medium may be applied to the terminal device in some embodiments of the application, and the computer program causes the computer to execute the corresponding process implemented by the terminal device in each method in some embodiments of the application. For the sake of brevity, details will not be repeated here.

A computer program product is also provided in some embodiments of the application, including computer program instructions. Optionally, the computer program product can be applied to the network device in some embodiments of the application, and the computer program instruction causes the computer to execute a corresponding process implemented by the network device in each method in some embodiments of the application. For the sake of brevity, details will not be repeated here. Optionally, the computer program product can be applied to the terminal device in some embodiments of the application, and the computer program instruction causes the computer to execute a corresponding process implemented by the terminal device in each method in some embodiments of the application. For the sake of brevity, details will not be repeated here.

A computer program is also provided in some embodiments of the application. Optionally, the computer program may be applied to the network device in some embodiments of the application. When the computer program is run on a computer, the computer is caused to execute a corresponding process implemented by the network device in each method in some embodiments of the application. For the sake of brevity, details will not be repeated here. Optionally, the computer program may be applied to the terminal device in some embodiments of the application. When the computer program is run on a computer, the computer is caused to execute a corresponding process implemented by the terminal device in each method in some embodiments of the application. For the sake of brevity, details will not be repeated here.

Those skilled in the art can clearly understand that for the convenience and conciseness of the description, the specific working process of the system, device and unit described above can refer to the corresponding process in the foregoing method embodiments, which will not be repeated here.

The terms "system" and "network" in the embodiments of the application are often used interchangeably herein. The term "and/or" in this disclosure refers to only an association relationship that describes associated objects, which means that there can be three kinds of relationships, for example, A and/or B means three cases: A exists alone, A and B exist at the same time, B exists alone. In addition, the character "/" in this disclosure generally indicates that the related objects before and after are in an "or" relationship.

In the embodiment of the application, "B corresponding to A" means that B is associated with A, and B can be determined according to A. However, it should also be understood that determining B based on A does not mean determining B based on A alone, and B may also be determined based on A and/or other information.

Those of ordinary skill in the art may realize that the units and algorithm steps of each example described in connection with the embodiments disclosed herein can be implemented by electronic hardware, or a combination of computer software and electronic hardware. Whether these functions are performed in hardware or software depends on the specific application and design constraints of the technical solution. Those of ordinary skill in the art can use different methods to implement the described functions for each specific application, but such implementation should not be considered to be beyond the scope of this application.

In the several embodiments provided in this application, it should be understood that the disclosed systems, devices, and methods may be implemented in other ways. For example, the division of units or modules or components in the device embodiments described above is only a logical function division. In actual implementation, there may be another division manner. For example, multiple units or modules or components may be combined or integrated into another system, or some units or modules or components can be ignored or not implemented. In addition, it should be noted that the mutual coupling or direct coupling or communication connection shown or discussed above may be indirect coupling or communication connection through some interfaces, devices or units, which may be electrical, mechanical or in other forms.

The above-mentioned units described display as separate components may be or may not be physically separated, that is, they may be located in one place, or may be distributed on multiple network units. A part or all of the units can be selected according to actual needs to achieve the objectives of the embodiments of the application.

In addition, each functional unit in each embodiment of the application may be integrated into one processing unit, or each unit may exist alone physically, or two or more units may be integrated into one unit.

If the functions are implemented in the form of software functional units and sold or used as an independent product, they can be stored in a computer-readable storage medium. Based on this understanding, an essential part of the technical solution of this application or, in other words, a part thereof that contributes to existing technology, or other parts of the technical solution can be embodied in the form of a software product. The computer software product is stored in a storage medium, including several instructions used for causing a computer device (which may be a personal computer, a server, or a network device, and the like) to perform all or part of the steps of the method described in some embodiments of the application. The foregoing storage medium includes various medium that can store program codes, such as a U disk, a mobile hard disk, a ROM, a RAM, a magnetic disk, or an optical disk.

The above is only the specific implementation of this application, but the protection scope thereof is not limited thereto. Any person skilled in the art can easily think of changes or replacements within the technical scope disclosed in this application, which should be covered by the protection scope of this application. Therefore, the protection scope of the present application shall be subject to the protection scope of the claims.

The following numbered clauses, describing aspects of the disclosure, are part of the description.
1. A method for radio resource management RRM measurement, characterized in comprising:
   determining, by a terminal device, a measurement mode of the RRM measurement in following multiple measurement modes:
   performing the RRM measurement only on a serving cell of the terminal device;
   not performing the RRM measurement;
   performing intra-frequency measurement based on first information configured for measurement;
   performing inter-frequency measurement or inter-Radio Access Technologies (inter-RAT) measurement based on the first information configured for measurement;
   performing intra-frequency measurement based on second information configured for measurement; and
   performing inter-frequency measurement or inter-RAT measurement based on the second information configured for measurement.
2. The method according to clause 1, wherein the determining, by the terminal device, the measurement mode of the RRM measurement in the multiple measurement modes comprises:
   determining, by the terminal device, the measurement mode according to a measurement of at least one measurement parameter used for the RRM measurement, and a threshold corresponding to each of the at least one measurement parameter.
3. The method according to clause 2, wherein the at least one measurement parameter comprises at least one of following measurement parameters:
   reference signal receiving power RSRP, reference signal receiving quality RSRQ, reference signal-signal to interference plus noise ratio RS-SINR, moving speed of the terminal device, temporal change rate of RSRP, temporal change rate of RSRQ, temporal change rate of RS-SINR, and a measured number of cells.
4. The method according to clause 2 or 3, wherein the terminal device is in a radio resource control RRC connected state,
   the determining, by the terminal device, the measurement mode according to the measurement of the at least one measurement parameter used for the RRM measurement and the threshold corresponding to each of the at least one measurement parameter comprises:
   determining, by the terminal device, to perform the RRM measurement only on the serving cell if a measurement of a part or all of the at least one measurement parameter is greater than its corresponding first threshold;
   determining, by the terminal device, to perform the RRM measurement based on the first information configured for measurement if a measurement of a part or all of the at least one measurement parameter is greater than its corresponding second threshold and less than its corresponding first threshold; and
   determining, by the terminal device, to perform the RRM measurement based on the second information configured for measurement if a measurement of a part or all of the at least one measurement parameter is less than the corresponding second threshold.
5. The method according to clause 2 or 3, wherein the terminal device is in an RRC idle state, and the RRM measurement comprises intra-frequency measurement,
   the determining, by the terminal device, the measurement mode according to the measurement of the at least one measurement parameter used for the RRM measurement and the threshold corresponding to each of the at least one measurement parameter comprises:
   determining, by the terminal device, not to perform the intra-frequency measurement if a measurement of a part or all of the at least one measurement parameter is greater than its corresponding first threshold;
   determining, by the terminal device, to perform the intra-frequency measurement based on the first information configured for measurement if a measurement of a part or all of the at least one measurement parameter is greater than its corresponding second threshold and less than its corresponding first threshold; and
   determining, by the terminal device, to perform the intra-frequency measurement based on the second information configured for measurement if a measurement of a part or all of the at least one measurement parameter is less than the corresponding second threshold.
6. The method according to clause 2 or 3, wherein the terminal device is in an RRC idle state, the RRM measurement comprises inter-frequency measurement or inter-RAT measurement, and a priority of frequency of the inter-frequency measurement or the inter-RAT measurement is lower than or equal to a priority of a currently used frequency,
   the determining, by the terminal device, the measurement mode according to the measurement of the at least one measurement parameter used for the RRM measurement and the threshold corresponding to each of the at least one measurement parameter comprises:
   determining, by the terminal device, not to perform the inter-frequency measurement or inter-RAT measurement if a measurement of a part or all of the at least one measurement parameter is greater than its corresponding first threshold;
   determining, by the terminal device, to perform the inter-frequency measurement or inter-RAT measurement based on the first information configured for measurement if a measurement of a part or all of the at least one measurement parameter is greater than its corresponding second threshold and less than its corresponding first threshold; and
   determining, by the terminal device, to perform the inter-frequency measurement or inter-RAT measurement based on the second information configured for measurement if a measurement of a part or all of the at least one measurement parameter is less than the corresponding second threshold.
7. The method according to clause 2 or 3, wherein the terminal device is in an RRC idle state, the RRM measurement comprises inter-frequency measurement or inter-RAT measurement, and the inter-frequency measurement or inter-RAT measurement has a priority of frequency higher than a priority of a currently used frequency,
   the determining, by the terminal device, the measurement mode according to the measurement of the at least one measurement parameter used for the RRM measurement and the threshold corresponding to each of the at least one measurement parameter comprises:
   determining, by the terminal device, to perform the inter-frequency measurement or inter-RAT measurement based on the second information configured for measurement.
8. The method according to any one of clauses 2 to 7, further comprising:
   acquiring, by the terminal device, the threshold corresponding to each of the at least one measurement parameter stored in the terminal device; or,
   receiving, by the terminal device, first indication information, wherein the first indication information is used for indicating the threshold corresponding to each of the at least one measurement parameter.
9. The method according to clause 8, wherein the first indication information is carried in radio resource control RRC signaling, media access control MAC signaling, or a broadcast message.
10. The method according to any one of clauses 2 to 9, wherein a threshold corresponding to the measurement parameter used by the terminal device in an RRC connected state is same as or different from a threshold corresponding to the measurement parameter used by the terminal device in an RRC idle state.
11. The method according to any one of clauses 1 to 10, wherein the first information configured for measurement used by the terminal device for performing the RRM measurement on different frequencies is the same or different, and/or the second information configured for measurement used by the terminal device for performing the RRM measurement on different frequencies is the same or different.
12. The method according to any one of clauses 1 to 11, wherein the first information configured for measurement comprises at least one of following measurement objects:
   synchronization signal block measurement time configuration SMTC, a pattern of measured synchronization signal block SSB, a pattern of measured time slot, and a list of measured cell identities.
13. The method according to any one of clauses 1 to 12, wherein the second information configured for measurement comprises at least one of following measurement objects:
   SMTC, a pattern of measured SSB, a pattern of measured time slot, and a list of measured cell identities.
14. The method according to any one of clauses 1 to 13, wherein a measurement object in the first information configured for measurement is a subset of measurement objects in the second information configured for measurement.
15. The method according to clause 1, further comprising:
   receiving, by the terminal device, second indication information, wherein the second indication information is used for indicating the measurement mode of the RRM measurement among the multiple measurement modes;
   wherein the determining, by the terminal device, the measurement mode of the RRM measurement in the multiple measurement modes comprises:
      determining, by the terminal device, the measurement mode of the RRM measurement according to the second indication information.
16. The method according to clause 15, wherein the second indication information is carried in a physical downlink control channel PDCCH, radio resource control RRC signaling, medium access control MAC signaling, or a broadcast message.
17. The method according to any one of clauses 1 to 16, further comprising:
   acquiring, by the terminal device, the first information configured for measurement and/or the second information configured for measurement stored in the terminal device; or,
   receiving, by the terminal device, third indication information, wherein the third indication information is used for indicating the first information configured for measurement and/or the second information configured for measurement.
18. The method according to clause 17, wherein the third indication information is carried in RRC signaling, MAC signaling, or a broadcast message.
19. A method for radio resource management RRM measurement, characterized in comprising:
   sending, by a network device, second indication information, wherein the second indication information is used for indicating a measurement mode of the RRM measurement in following multiple measurement modes:
   performing the RRM measurement only on a serving cell of a terminal device;
   not performing the RRM measurement;
   performing intra-frequency measurement based on first information configured for measurement;
   performing inter-frequency measurement or inter-RAT measurement based on the first information configured for measurement;
   performing intra-frequency measurement based on second information configured for measurement; and
   performing inter-frequency measurement or inter-RAT measurement based on the second information configured for measurement.
20. The method according to clause 19, wherein the second indication information is carried in a physical downlink control channel PDCCH, radio resource control RRC signaling, medium access control MAC signaling, or a broadcast message.
21. The method according to clause 19 or 20, further comprising:
   sending, by the network device, third indication information, wherein the third indication information is used for indicating the first information configured for measurement and/or the second information configured for measurement.
22. The method according to clause 21, wherein the third indication information is carried in RRC signaling, MAC signaling, or a broadcast message.
23. A method for radio resource management RRM measurement, characterized in comprising:
   sending, by a network device, first indication information, wherein the first indication information is used for indicating a threshold corresponding to each of at least one measurement parameter used by the RRM measurement, and the threshold corresponding to each of the at least one measurement parameter is used by a terminal device for determining a measurement mode of the RRM measurement in following multiple measurement modes:
   performing the RRM measurement only on a serving cell of the terminal device;
   not performing the RRM measurement;
   performing intra-frequency measurement based on first information configured for measurement;
   performing inter-frequency measurement or inter-RAT measurement based on the first information configured for measurement;
   performing intra-frequency measurement based on second information configured for measurement; and
   performing inter-frequency measurement or inter-RAT measurement based on the second information configured for measurement.
24. The method according to clause 23, wherein the first indication information is carried in RRC signaling, MAC signaling, or a broadcast message.
25. The method according to clause 23 or 24, further comprising:
   sending, by the network device, third indication information, wherein the third indication information is used for indicating the first information configured for measurement and/or the second information configured for measurement.
26. The method according to clause 25, wherein the third indication information is carried in RRC signaling, MAC signaling, or a broadcast message.
27. A terminal device, characterized in comprising:
   a processing unit, configured to determine a measurement mode of radio resource management RRM measurement in following multiple measurement modes:
   performing the RRM measurement only on a serving cell of the terminal device;
   not performing the RRM measurement;
   performing intra-frequency measurement based on first information configured for measurement;
   performing inter-frequency measurement or inter-RAT measurement based on the first information configured for measurement;
   performing intra-frequency measurement based on second information configured for measurement; and
   performing inter-frequency measurement or inter-RAT measurement based on the second information configured for measurement.
28. The terminal device according to clause 27, wherein the processing unit is specifically configured to:
   determine the measurement mode according to a measurement of at least one measurement parameter used for the RRM measurement, and a threshold corresponding to each of the at least one measurement parameter.
29. The terminal device according to clause 28, wherein the at least one measurement parameter comprises at least one of following measurement parameters:
   reference signal receiving power RSRP, reference signal receiving quality RSRQ, reference signal-signal to interference plus noise ratio RS-SINR, moving speed of the terminal device, temporal change rate of RSRP, temporal change rate of RSRQ, temporal change rate of RS-SINR, and a measured number of cells.
30. The terminal device according to clause 28 or 29, wherein the terminal device is in a radio resource control RRC connected state,
   the processing unit is specifically configured to:
   determine to perform the RRM measurement only on the serving cell if a measurement of a part or all of the at least one measurement parameter is greater than its corresponding first threshold;
   determine to perform the RRM measurement based on the first information configured for measurement if a measurement of a part or all of the at least one measurement parameter is greater than its corresponding second threshold and less than its corresponding first threshold; and
   determine to perform the RRM measurement based on the second information configured for measurement if a measurement of a part or all of the at least one measurement parameter is less than the corresponding second threshold.
31. The terminal device according to clause 28 or 29, wherein the terminal device is in an RRC idle state, and the RRM measurement comprises intra-frequency measurement,
   the processing unit is specifically configured to:
   determine not to perform the intra-frequency measurement if a measurement of a part or all of the at least one measurement parameter is greater than its corresponding first threshold;
   determine to perform the intra-frequency measurement based on the first information configured for measurement if a measurement of a part or all of the at least one measurement parameter is greater than its corresponding second threshold and less than its corresponding first threshold; and
   determine to perform the intra-frequency measurement based on the second information configured for measurement if a measurement of a part or all of the at least one measurement parameter is less than the corresponding second threshold.
32. The terminal device according to clause 28 or 29, wherein the terminal device is in an RRC idle state, the RRM measurement comprises inter-frequency measurement or inter-RAT measurement, and the inter-frequency measurement or inter-RAT measurement has a priority of frequency lower than or equal to a priority of a currently used frequency,
   the processing unit is specifically configured to:
   determine not to perform the inter-frequency measurement or inter-RAT measurement if a measurement of a part or all of the at least one measurement parameter is greater than its corresponding first threshold;
   determine to perform the inter-frequency measurement or inter-RAT measurement based on the first information configured for measurement if a measurement of a part or all of the at least one measurement parameter is greater than its corresponding second threshold and less than its corresponding first threshold; and
   determine to perform the inter-frequency measurement or inter-RAT measurement based on the second information configured for measurement if a measurement of a part or all of the at least one measurement parameter is less than the corresponding second threshold.
33. The terminal device according to clause 28 or 29, wherein the terminal device is in an RRC idle state, the RRM measurement comprises inter-frequency measurement or inter-RAT measurement, and the inter-frequency measurement or inter-RAT measurement has a priority of frequency higher than a priority of a currently used frequency,
   the processing unit is specifically configured to:
   determine to perform the inter-frequency measurement or inter-RAT measurement based on the second information configured for measurement.
34. The terminal device according to any one of clauses 28 to 33, further comprising a transceiving unit, wherein the processing unit is further configured to:
   acquire the threshold corresponding to each of the at least one measurement parameter stored in the terminal device; or,
   control the transceiving unit to receive first indication information, wherein the first indication information is used for indicating the threshold corresponding to each of the at least one measurement parameter.
35. The terminal device according to clause 34, wherein the first indication information is carried in radio resource control RRC signaling, media access control MAC signaling, or a broadcast message.
36. The terminal device according to any one of clauses 28 to 35, wherein a threshold corresponding to the measurement parameter used by the terminal device in an RRC connected state is same as or different from a threshold corresponding to the measurement parameter used by the terminal device in an RRC idle state.
37. The terminal device according to any one of clauses 27 to 36, wherein the first information configured for measurement used by the terminal device for performing the RRM measurement on different frequencies is the same or different, and/or the second information configured for measurement used by the terminal device for performing the RRM measurement on different frequencies is the same or different.
38. The terminal device according to any one of clauses 27 to 37, wherein the first information configured for measurement comprises at least one of following measurement objects:
   synchronization signal block measurement time configuration SMTC, a pattern of measured synchronization signal block SSB, a pattern of measured time slot, and a list of measured cell identities.
39. The terminal device according to any one of clauses 27 to 38, wherein the second information configured for measurement comprises at least one of following measurement objects:
   SMTC, a pattern of measured SSB, a pattern of measured time slot, and a list of measured cell identities.
40. The terminal device according to any one of clauses 27 to 39, wherein a measurement object in the first information configured for measurement is a subset of measurement objects in the second information configured for measurement.
41. The method according to clause 27, further comprising a transceiving unit configured to:
   receive second indication information, wherein the second indication information is used for indicating the measurement mode of the RRM measurement among the multiple measurement modes;
   wherein the processing unit is specifically configured to:
      determine the measurement mode of the RRM measurement according to the second indication information.
42. The terminal device according to clause 41, wherein the second indication information is carried in a physical downlink control channel PDCCH, radio resource control RRC signaling, medium access control MAC signaling, or a broadcast message.
43. The terminal device according to any one of clauses 27 to 42, further comprising a transceiving unit, wherein the processing unit is further configured to:
   acquire the first information configured for measurement and/or the second information configured for measurement stored in the terminal device; or,
   control the transceiving unit to receive third indication information, wherein the third indication information is used for indicating the first information configured for measurement and/or the second information configured for measurement.
44. The terminal device according to clause 43, wherein the third indication information is carried in RRC signaling, MAC signaling, or a broadcast message.
45. A network device, characterized in comprising:
   a processing unit, configured to generate second indication information, wherein the second indication information is used for indicating a measurement mode of radio resource management RRM measurement in multiple measurement modes; and
   a transceiving unit, configured to send the second indication information;
   wherein the multiple measurement modes comprise:
      performing the RRM measurement only on a serving cell of a terminal device;
      not performing the RRM measurement;
      performing intra-frequency measurement based on first information configured for measurement;
      performing inter-frequency measurement or inter-RAT measurement based on the first information configured for measurement;
      performing intra-frequency measurement based on second information configured for measurement; and
      performing inter-frequency measurement or inter-RAT measurement based on the second information configured for measurement.
46. The network device according to clause 45, wherein the second indication information is carried in a physical downlink control channel PDCCH, radio resource control RRC signaling, medium access control MAC signaling, or a broadcast message.
47. The network device according to clause 45 or 46, wherein the transceiving unit is further configured to:
   send third indication information, wherein the third indication information is used for indicating the first information configured for measurement and/or the second information configured for measurement.
48. The network device according to clause 47, wherein the first information configured for measurement and/or the second information configured for measurement is carried in RRC signaling, MAC signaling, or a broadcast message.
49. A network device, characterized in comprising:
   a processing unit, configured to generate first indication information, wherein the first indication information is used for indicating a threshold corresponding to each of at least one measurement parameter used by radio resource management RRM measurement, and the threshold corresponding to each of the at least one measurement parameter is used by a terminal device for determining a measurement mode of the RRM measurement in multiple measurement modes; and
   a transceiving unit, configured to send the first indication information,
   wherein the multiple measurement modes comprise:
      performing the RRM measurement only on a serving cell of the terminal device;
      not performing the RRM measurement;
      performing intra-frequency measurement based on first information configured for measurement;
      performing inter-frequency measurement or inter-RAT measurement based on the first information configured for measurement;
      performing intra-frequency measurement based on second information configured for measurement; and
      performing inter-frequency measurement or inter-RAT measurement based on the second information configured for measurement.
50. The network device according to clause 49, wherein the first indication information is carried in RRC signaling, MAC signaling, or a broadcast message.
51. The network device according to clause 49 or 50, wherein the transceiving unit is further configured to:
   send third indication information, wherein the third indication information is used for indicating the first information configured for measurement and/or the second information configured for measurement.
52. The network device according to clause 51, wherein the third indication information is carried in RRC signaling, MAC signaling, or a broadcast message.
53. A terminal device, characterized in comprising a processor and a memory, wherein the memory is configured to store a computer program, and the processor is configured to call and run the computer program stored in the memory, thereby implementing the method according to any one of clauses 1 to 18.
54. A network device, characterized in comprising a processor and a memory, wherein the memory is configured to store a computer program, and the processor is configured to call and run the computer program stored in the memory, thereby implementing the method according to any one of clauses 19 to 22 or the method according to any one of clauses 23 to 26.
55. A chip, characterized in comprising a processor, configured to call and run a computer program from a memory, thereby causing an apparatus installed with the chip to implement the method according to any one of clauses 1 to 18.
56. A chip, characterized in comprising a processor, configured to call and run a computer program from a memory, thereby causing an apparatus installed with the chip to implement the method according to any one of clauses 19 to 22 or the method according to any one of clauses 23 to 26.
57. A computer readable storage medium, characterized in being used for storing a computer program, wherein the computer program is used for causing a computer to implement the method according to any one of clauses 1 to 18.
58. A computer readable storage medium, characterized in being used for storing a computer program, wherein the computer program is used for causing a computer to implement the method according to any one of clauses 19 to 22 or the method according to any one of clauses 23 to 26.
59. A computer program product, characterized in comprising computer program instructions that cause a computer to implement the method according to any one of clauses 1 to 18.
60. A computer program product, characterized in comprising computer program instructions that cause a computer to implement the method according to any one of clauses 19 to 22 or the method according to any one of clauses 23 to 26.
61. A computer program, characterized in being used for causing a computer to implement the method according to any one of clauses 1 to 18.
62. A computer program, characterized in being used for causing a computer to implement the method according to any one of clauses 19 to 22 or the method according to any one of clauses 23 to 26.
63. A communication system, characterized in comprising:
   the terminal device according to any one of clauses 27 to 44; and
   the network device according to any one of clauses 45-48 or the network device according to any one of clauses 49-52.

## Claims

1. A method (200) for radio resource management RRM measurement, comprising:
selecting (210), by a terminal device (120), a measurement mode of the RRM measurement from among a plurality of measurement modes comprising the following measurement modes:
performing the RRM measurement only on a serving cell of the terminal device;
performing intra-frequency measurement based on first information configured for measurement;
performing inter-frequency measurement or inter-Radio Access Technologies (inter-RAT) measurement based on the first information configured for measurement; and
performing inter-frequency measurement or inter-RAT measurement based on the second information configured for measurement,
**characterized in that** the plurality of measurement modes comprises:
not performing the RRM measurement; and
performing intra-frequency measurement based on second information configured for measurement.

2. The method according to claim 1, wherein the selecting, by the terminal device, the measurement mode of the RRM measurement from among the plurality of measurement modes comprises:
selecting, by the terminal device, the measurement mode according to a measurement of at least one measurement parameter used for the RRM measurement, and one or more thresholds corresponding to each of the at least one measurement parameter.

3. The method according to claim 2, wherein the at least one measurement parameter comprises at least one of following measurement parameters:
reference signal receiving power RSRP, reference signal receiving quality RSRQ, reference signal-signal to interference plus noise ratio RS-SINR, moving speed of the terminal device, temporal change rate of RSRP, temporal change rate of RSRQ, temporal change rate of RS-SINR, and a measured number of cells.

4. The method according to claim 2 or 3, wherein the terminal device is in an RRC idle state, and the RRM measurement comprises intra-frequency measurement,
the selecting, by the terminal device, the measurement mode according to the measurement of the at least one measurement parameter used for the RRM measurement and the one or more thresholds corresponding to each of the at least one measurement parameter comprises:
selecting, by the terminal device, not to perform the intra-frequency measurement if a measurement of a part or all of the at least one measurement parameter is greater than a corresponding first threshold;
selecting, by the terminal device, to perform the intra-frequency measurement based on the first information configured for measurement if a measurement of a part or all of the at least one measurement parameter is greater than a corresponding second threshold and a measurement of a part or all of the at least one measurement parameter is less than its corresponding first threshold; and
selecting, by the terminal device, to perform the intra-frequency measurement based on the second information configured for measurement if a measurement of a part or all of the at least one measurement parameter is less than the corresponding second threshold.

5. The method according to claim 2 or 3, wherein the terminal device is in an RRC idle state, the RRM measurement comprises inter-frequency measurement or inter-RAT measurement, and a priority of frequency of the inter-frequency measurement or the inter-RAT measurement is lower than or equal to a priority of a currently used frequency,
the selecting, by the terminal device, the measurement mode according to the measurement of the at least one measurement parameter used for the RRM measurement and the one or more thresholds corresponding to each of the at least one measurement parameter comprises:
selecting, by the terminal device, not to perform the inter-frequency measurement or inter-RAT measurement if a measurement of a part or all of the at least one measurement parameter is greater than a corresponding first threshold;
selecting, by the terminal device, to perform the inter-frequency measurement or inter-RAT measurement based on the first information configured for measurement if a measurement of a part or all of the at least one measurement parameter is greater than a corresponding second threshold and a measurement of a part or all of the at least one measurement parameter is less than its corresponding first threshold; and
selecting, by the terminal device, to perform the inter-frequency measurement or inter-RAT measurement based on the second information configured for measurement if a measurement of a part or all of the at least one measurement parameter is less than the corresponding second threshold.

6. The method according to any one of claims 2 to 5, further comprising:
acquiring, by the terminal device, the threshold corresponding to each of the at least one measurement parameter stored in the terminal device; or,
receiving, by the terminal device, first indication information, wherein the first indication information is used for indicating the threshold corresponding to each of the at least one measurement parameter.

7. The method according to claim 6, wherein the first indication information is carried in radio resource control RRC signaling, media access control MAC signaling, or a broadcast message.

8. The method according to claim 1, further comprising:
receiving, by the terminal device, second indication information, wherein the second indication information is used for indicating the measurement mode of the RRM measurement among the multiple measurement modes;
wherein the selecting, by the terminal device, the measurement mode of the RRM measurement from among the plurality of measurement modes comprises:
selecting, by the terminal device, the measurement mode of the RRM measurement according to the second indication information.

9. The method according to claim 8, wherein the second indication information is carried in a physical downlink control channel PDCCH, radio resource control RRC signaling, medium access control MAC signaling, or a broadcast message.

10. The method according to any one of claims 1 to 9, further comprising:
acquiring, by the terminal device, the first information configured for measurement and/or the second information configured for measurement stored in the terminal device; or,
receiving, by the terminal device, third indication information, wherein the third indication information is used for indicating the first information configured for measurement and/or the second information configured for measurement.

11. A method for radio resource management RRM measurement, comprising:
sending, by a network device (110), first indication information, wherein the first indication information is used for indicating a threshold corresponding to each of at least one measurement parameter used by the RRM measurement, and the threshold corresponding to each of the at least one measurement parameter is used by a terminal device (120) for selecting a measurement mode of the RRM measurement from among a plurality of measurement modes comprising the following measurement modes:
performing the RRM measurement only on a serving cell of the terminal device;
performing intra-frequency measurement based on first information configured for measurement;
performing inter-frequency measurement or inter-RAT measurement based on the first information configured for measurement; and
performing inter-frequency measurement or inter-RAT measurement based on the second information configured for measurement,
**characterized in that** the plurality of measurement modes comprises:
not performing the RRM measurement; and
performing intra-frequency measurement based on second information configured for measurement.

12. The method according to claim 11, wherein the first indication information is carried in RRC signaling, MAC signaling, or a broadcast message.

13. The method according to claim 11 or 12, further comprising:
sending, by the network device, third indication information, wherein the third indication information is used for indicating the first information configured for measurement and/or the second information configured for measurement.

14. A terminal device (500), **characterized in** comprising a processor (510) and a memory (520), wherein the memory is configured to store a computer program, and the processor is configured to call and run the computer program stored in the memory, thereby implementing the method according to any one of claims 1 to 10.

15. A network device (600), **characterized in** comprising a processor (610) and a memory (620), wherein the memory is configured to store a computer program, and the processor is configured to call and run the computer program stored in the memory, thereby implementing the method according to any one of claims 11 to 13.
